# EUROPEAN PATENT SPECIFICATION

(11) **EP 1 888 215 B1**
(45) Date of publication and mention of the grant of the patent: **08.12.2010**
(21) Application number: 06842701.2
(22) Date of filing: 29.12.2006
(51) Int. Cl.: B01F 5/06, B29C 67/00, B22F 3/105, B29C 33/38

(54) **PROCESS FOR MANUFACTURING A STATIC MIXER**
VERFAHREN ZURN HERSTELLUNG EINES STATISCHEN MISCHERS
PROCÉDÉ DE FABRICATION D'UN MÉLANGEUR STATIQUE

(30) Priority: 04.04.2006 IT PR20060031
(43) Date of publication of application: 20.02.2008
(73) Proprietor: M.A.E. S.p.A., 29100 Piacenza (IT)
(72) Inventor: ROVELLINI, Marco, I-29100 Piacenza (IT)
(74) Representative: Faggioni, Marco
(86) International application number: PCT/IB2006/055056
(87) International publication number: WO 2007/113627

(56) References cited:
- WO-A-03/106146
- WO-A-2004/073961
- GB-A- 2 296 673
- US-A- 4 844 144
- US-A- 5 937 265
- US-A1- 2005 173 838
- US-B1- 6 505 089
- LUIS N. FOLGAR: "Small size fluidic devices by freeform manufacturing" JOURNAL OF UNDERGRADUATE MATERIALS RESEARCH (JUMR), [Online] vol. 1, 2005, pages 15-19, XP002435411 Blacksburg, Virginia Retrieved from the Internet: URL:http://www.jumr.mse.vt.edu/DocsforWeb/ JUMR%20Final%20Draft%20Fall%202005.pdf> [retrieved on 2007-05-29]
- BERTSCH A ET AL: "3D micromixers - downscaling large scale industrial static mixers" PROCEEDINGS OF THE IEEE 14TH. ANNUAL INTERNATIONAL CONFERENCE ON MICROELECTRO MECHANICAL SYSTEMS. MEMS 2001. INTERLAKEN, SWITZERLAND, JAN. 21 - 25, 2001, IEEE INTERNATIONAL MICRO ELECTRO MECHANICAL SYSTEMS CONFERENCE, NEW YORK, NY : IEEE, US, vol. CONF. 14, 21 January 2001 (2001-01-21), pages 507-510, XP010534659 ISBN: 0-7803-5998-4
- RICHARD COMERFORD: "The flexible factory: case studies" IEEE SPECTRUM SEPTEMBER 1993, September 1993 (1993-09), pages 28-29, Retrieved from the Internet: URL:http://ieeexplore.ieee.org/iel3/6/6815 /00275160.pdf> [retrieved on 2008-09-02]

## Description

The present invention is related with a static mixing device, below called static mixer in short, of the type which may be introduced in a pipe or associated with the same to make a portion thereof, so as to evenly blend a fluid flowing in the pipe, without using rotating parts.

The present invention specifically regards a process for manufacturing a static mixer of the above-described type.

In the processing of fluids, in particular of fluids flowing in pipes, the use of devices called static mixers is widely known. A static mixer essentially consists of an articulated, three-dimensional, solid structure, i.e. consisting of multiple elements having planar or curved surfaces, variously arranged and angled to the flow direction, suitable to cause continuous breakdowns of the fluid stream flowing in the pipe, leading a strong turbulence in the same which cause a quick stirring of the individual threads of the stream, until obtaining a blending thereof sufficiently uniform for the specific application.

In particular, as far as the chemical industry is concerned, static mixers are widely used, for example, for blending melted polymers flowing in feeding pipes of dies, extrusion heads, moulding machines or other similar plants. As a matter of fact, due to their high viscosity, such fluids have an uneven speed distribution within a pipe section, since the fluid tends to flow much more slowly near the pipe wall, compared to the central section of the pipe. Therefore, the portion of fluid in contact with the pipe wall tends to have longer stay times in the pipe compared to the central portion of fluid, with resulting irregularity of chemical-physical properties in the fluid and also possible degradation of the components thereof.

The introduction of static mixers in pipes has in actual fact provided a simple and economically viable solution to the above-mentioned problem. Moreover, the blending effectiveness of such devices may be easily changed, since it is directly proportional to the mixer length and, the length thereof being equal, it is the greater, the thicker the mesh defined by the structure it consists of.

Known structures of static mixers are described for example in EP-0.071.454 and in EP-1.510.247, wherein it is provided to use various materials and structures defining different geometries.

In any case, all conventional technical solutions provide the manufacturing of the internal structure of static mixers by mechanical machining of the individual elements of the structure and the subsequent assembly thereof, for example by welding, brasing, or other conventional, mechanical anchoring methods, to finally form the three-dimensional structure which characterises these devices. Such structure is directly introduced in and anchored or fastened to the pipe wherein mixing is to occur or, more frequently, it is previously assembled on an independent pipe stub, which is then introduced in a housing seat provided in the pipe or associated with the same, thereby forming a portion of said pipe. In this last case, depending on the type of application, the pipe stub containing the static mixer can be welded directly to the pipe, or provided with flanges to accomplish a disassemblable coupling at the pipe ends, which must of course be equipped with corresponding flanges.

Besides the remarkable advantages in terms of functionality, cost-effectiveness, flexibility, and efficiency of the above-mentioned static mixers, they also have some substantial disadvantages, due precisely to the need of assembling different elements and components to form the internal structure intended to accomplish the mixing and hence of anchoring the same within a pipe. As a matter of fact, the joints between said components and between the same and the pipe cause roughness, defective or irregular welding lines, sharp changes of direction and/or of inclination and so on, with the consequent formation of undesirable dead corners. This causes an undesirable phenomenon, i.e. the formation of stagnation zones or in any case zones wherein a slowing-down of fluid flow takes place, in correspondence whereof the individual products being blended may undergo degradation (in particular, depending on the nature of the fluids processed, a decrease but also an increase in viscosity, as well as an alteration of other chemical-physical properties or of the chemical structure itself), resulting in the risk of defects of and damage to the final product obtained from the processing of the blended products. Such degradations are of course of a much lower quantitative level than those which would occur in the absence of the static mixer, but unfortunately they may lead to equally serious consequences due to the presence of punctiform defects in the final product, where they are often perceptible and can therefore lower the quality of the product.

In last-generation static mixers it has been attempted to overcome this problem through an internal structure of the mixer shaped so as to be distanced, by a preset gap, from the pipe wall, in order to reduce the overall number of joined areas and, consequently, of possible fluid stagnation areas. This approach has effectively led to advantages in terms of a reduction of punctiform defects. However, since the mixing effect is thereby removed precisely where it is most needed, i.e. near the pipe wall, the effectiveness of this type of devices is smaller, so that in order to achieve the same degree of final homogenisation it is necessary to use longer static mixers than those wherein the blending-causing structure extends up to the pipe inner wall.

Document "Small size fluidic devices by freeform manufacturing", luis N. Folgar, Journal of undergraduale materials research, Vol. 1, 2005, pages 15-19, discloses static mixers produced by a SLS technique.

The object of the present invention is hence to eliminate the above-mentioned disadvantages of known-type static mixers, providing a method for manufacturing static mixing device of the threads of a stream, which is highly efficient and, at the same time, capable of preventing the formation of dead corners in the path of fluid through the device, due to the absence of discontinuities, angles and sharp edges, welding lines, joints or other mounting imperfections between various components.

The object of the present invention is to provide a particularly simple and effective process for manufacturing static mixers of any shape and geometry, avoiding discontinuities, angles and sharp edges, welding lines, joints or other mounting imperfections in the structure thereof.

Said objects are fully achieved, according to the present invention, by a process for manufacturing the same having the features defined in the accompanying independent claim.

Further features and advantages of the present invention will in any case be clearer from the following description of a preferred embodiment of the static mixer produced by a method according to the invention, provided purely as a non-limiting example and shown in the accompanying drawings, wherein:

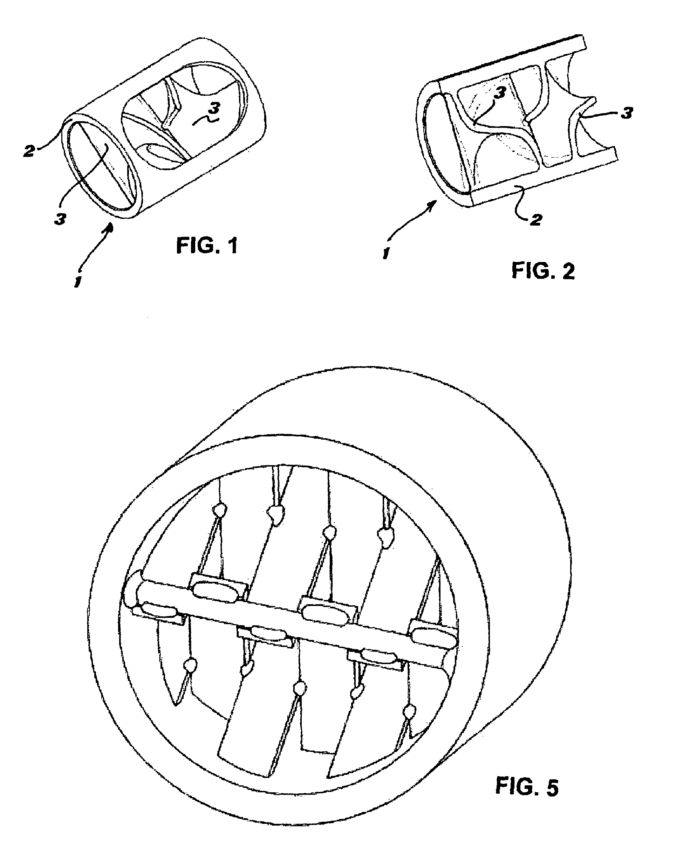

fig. 1 is a perspective diagrammatic view of a first embodiment of a static mixer ;
fig. 2 is a perspective view of the mixer of fig. 1, sectioned along an axial plane;

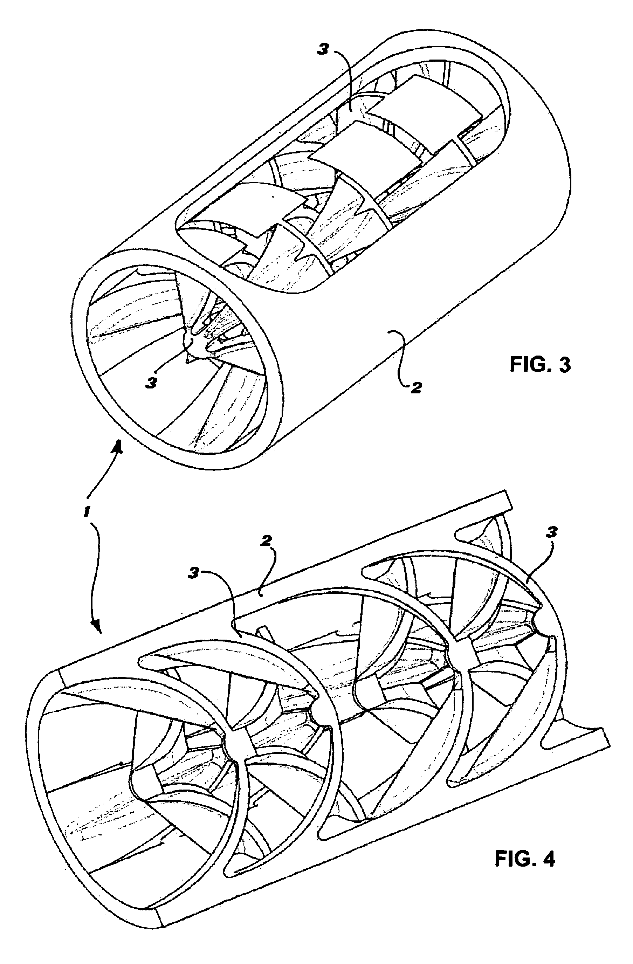

fig. 3 is a perspective diagrammatic view of a second embodiment of a static mixer ;
fig. 4 is a perspective view of the mixer of fig. 3, sectioned along an axial plane; and
fig. 5 is a perspective diagrammatic view of a static mixer according to the known art.

In the drawings, 1 indicates a static mixing device . Device 1 comprises an outer cylindrical portion 2 - intended to form a portion of the pipe in which the fluid substances to be mixed flow and which can be introduced in said pipe or associated therewith through the above-described known means - as well as an internal three-dimensional structure 3 consisting of a plurality of elements with planar or curved surfaces, having different shape, position and angle, and overall capable of causing a high degree of turbulence and stirring in the fluid flowing in pipe 2, in order to achieve quick and full blending of the individual threads of the fluid stream. According to the basic feature of the invention, the individual elements forming the inner structure 3 of the mixer are radiused to one another, and to outer cylindrical portion 2, with no discontinuities and without mechanical joints, hence forming a single, monolithic block.

In order to achieve this result, static mixer 1 is manufactured by a selective laser sintering process forming subsequent layers, commonly known as SLS process. Firstly, a three-dimensional drawing of static mixer 1 is prepared via a processor, and in particular a drawing of the inner structure 3 thereof, using a CAD software or similar programme. In a second step the finished product is obtained, starting from suitable powder compounds, through a sintering process, in particular through the selective application of a laser beam which causes partial melting of subsequent layers of the above-said powder compounds, said laser beam being guided by a processor according to the various drawings of corresponding subsequent sections of the static mixer, each one derived in succession from the above-said overall three-dimensional drawing. Be it noticed that, precisely due to the particular manufacturing process employed, the static mixer 1 thus formed is fully free from welding lines, brasing lines or other types of joints between different elements or components, since it consists of a powder-sintered product, and that it is thereby possible to obtain a perfect connection between inner structure 3 and outer cylindrical portion 2, i.e. a connection free from any discontinuity which may cause the formation of critical areas in which the flow stagnates.

Be it noticed that the SLS process per se has been known for some time, and is widely used in particular for manufacturing moulds, prototypes or also individual components, for example in the aeronautical or medical industry.

In fact, it has also been suggested to use such technique for manufacturing planar elements of static mixers (DE 20206371U), such as for example a blending chamber of static micromixers with planar-surface channels (WO0078438). No teaching or suggestion on the use of the SLS process for manufacturing a static mixer comprising also curved surfaces as well as a cylindrical element containing the same in a single piece free from mechanical connections and discontinuities, however, comes from these documents.

Both thermoplastic polymers and metal products may be used as powder compounds in the manufacturing process of static mixer 1 of the invention, according to the mechanical features desired for the final product; in the case of metal products, such as for example steel microspheres, these must be previously coated with a layer of thermoplastic polymeric material or of low-melting metals, for example alloys with a copper, zinc and tin base, whose partial melting makes the sintering process possible.

The static mixers obtained from metal powders sintered with the SLS process may be later subjected to heat infiltration by capillarity using melted metals or metal alloys, or may undergo thermal treatments for the stabilisation of the obtained sintering.

When the specific application of the static mixer makes it troublesome to use copper-based alloys - for example in the case of food products with an acidic pH which may bring the copper into solution - it is nevertheless possible to obtain a static mixer having the above-described features through a combined process employing the SLS process and the subsequent "lost-wax" casting. In particular, the product is initially manufactured through the SLS process, but using a special synthetic, powder material having a relatively low melting point (for example a product known on the market as CastForm). The product thus obtained then undergoes infiltration with ordinary foundry waxes and is then dipped in a bath of liquid ceramic material until said material completely fills the empty areas of the product, and is subsequently heat-treated (of course at a lower temperature than the melting one thereof) until hardening of the ceramic material is complete. At that point the temperature of the oven is increased to above the melting temperature of the synthetic material and of the wax used in the preparation of the original shape, so as to cause the melting thereof and to leave a negative ceramic mould of the product, which mould is then used to manufacture the piece by casting a molten metal suitable to the specific application, for example a stainless steel.

Finally, it is possible that on an inner surface of static mixer 1, i.e. on a surface in working contact with the fluid to be mixed, a finishing coating is applied by which it is possible to give the product special features of low friction or of wear resistance, or other special chemical-physical properties. Said coating may consist for example of a plastic material, such as PTFE (Teflon), or of a metal material, such as nickel, applied by chemical deposition from a salt in a solution.

The object of the invention is a manufacturing process of a static mixer 1, which mixer may be introduced in a pipe 2 or which may be associated with the same, for blending a fluid flowing in such pipe. Such process provides a sintering step of a product in a powder form, so as to obtain a static mixer consisting of an outer cylindrical portion and of an inner blending structure 3 formed integrally, with no discontinuities, welding/brasing lines or mechanical connections. Said sintering step is performed according to the SLS process, i.e. it provides the use of a laser beam with a selective action on layers of said powder material applied in succession.

In particular, the sintering step provides the sintering of a product made of plastic material, such as for example polyamide (Nylon).

Sintering may be performed with a synthetic powder material having a low melting temperature, so as to then manufacture an intermediate ceramic mould and then a final product of metal material with a high melting temperature, through a lost-wax casting process.

The sintering step comprises a plurality of successive sintering steps, through the action of a laser beam on a plurality of working planes (according to a mode known per se in the context of SLS processes). Thereby, the mixer consists of a plurality of layers (corresponding to said plurality of successive sintering steps), juxtaposed according to a set direction, i.e. the advancement direction of the sintering process. In the standard application of the SLS process there is provided that each working plane (whereon the laser beam acts on each occasion in said succession of sintering steps) is perpendicular to the longitudinal axis of the mixer resulting from the sintering. In the sintering step according to the present invention, however, it is possible and useful to employ sintering processes with layers which may be oriented differently, according to any angle lying between 0° and 90° to the longitudinal axis of the manufactured mixer, according to an optimisation of the manufacturing process and of the fluid-dynamic conditions provided within the mixer. As a matter of fact, since the SLS sintering process leaves in the raw product a thin line between successive layers, it is possible to arrange such line so that it interferes positively with the blending process.

Moreover, said process can provide, following the sintering step, a heat treatment step of sintered mixer 1, so as to stabilise the sintering or in order to achieve an infiltration by capillarity of a metal material into a porous portion of said structure. The infiltration is achieved, for example, simply by introducing the sintered product into an oven, in contact with a metal block, preferably a bronze one, so that when said metal melts it can seep by capillarity into the pores of the sintered product. Said heat treatment or infiltration step allows to make the mixer more solid and homogeneous, eliminating or reducing gaps and porosity.

The process finally can also provide a possible step for the application of a coating to an inner surface of the mixer, after the sintering step and after the heat treatment/infiltration step, if any. In particular, said coating step provides a chemical deposition step, from a solution of a metal salt, on the surface of the mixer in working contact with the fluid to be mixed, or an electrochemical-deposition step from a metal salt solution. As an alternative to the above said metal coating, or in addition thereto, the coating step provides the coating with a plastic material through a melting step of plastic material powders, or a dipping step of the mixer in a thermoplastic liquid mixture or in a solution comprising a thermosetting plastic material.

The surface coating briefly described above allows to obtain different degrees of finish compared to the raw sintered piece, and hence special chemical-physical properties of the surface in contact with the fluid, optimised according to the possible chemical interactions with the fluid or to an increased resistance to wear.

For some types of applications it may be necessary or preferable for the surface of the mixer inner walls to be free from the typical parallel lines characteristic of the SLS manufacturing processes, or at least for the height of the same to be substantially lower. This result may be achieved by introducing in the process of the present invention a smoothing step of the mixer inner surface, said step preferably occurring just before the finishing coating step.

The above-said smoothing step may be performed chemically or mechanically. In the former case, an acidic solution having a similar composition to those commonly used in chemical polishing processes of stainless steel pipes for food use is made to flow inside the static mixer for a time sufficient to obtain the necessary degree of smoothness. In the second case, a preferred mode of mechanical smoothing - considering the high complexity of the geometries involved - is that obtainable through a sanding process accomplished in a machine, preferably of the closed-circuit type, which injects high-speed, compressed air mixed with abrasive sands into the static mixer. It is useful to notice that in both cases the smoothing processes are fluid-dynamic, so that precisely those areas are automatically smoothed to a higher degree, which will later experience a more intense flow of working fluid, in terms of flow rate or speed.

In conclusion, the method of the present invention provides a static mixer free from sharp corners and edges, gaps, roughness and other imperfections which, in working conditions, would cause dead corners, in connection with the flow of the fluid to be blended. The application of an SLS sintering process for manufacturing a static mixer allows to obtain all the cited advantages, overcoming the drawbacks of known-type static mixers regardless of the geometry of blending inner structure 3, which may take up any shape or arrangement, according only to the fluid-dynamic requirements of the compounds to be blended.

As a matter of fact, the sintering of the mixer as a single-piece, three-dimensional body formed of an outer cylindrical portion and of an inner blending structure, mutually connected with no discontinuities, welding lines, brasing lines and mechanical joints, allows on the one hand to avoid the need to arrange individual components to be assembled later, thereby introducing imperfections, angles, edges and discontinuities and, on the other hand, it allows to have an inner blending structure which extends to the pipe wall, hence performing the stirring and turbulence action precisely in the area wherein the flow tends instead to slow down and to have a laminar trend.

A remarkable advantage provided by such static mixer is finally that of allowing custom-made manufacture according to the individual client's requirements. As a matter of fact, in the manufacturing process according to the present invention there is no intermediate industrial step between the one of the preparation of a three-dimensional mixer drawing and that of the manufacture thereof. This hence allows to have very high manufacturing flexibility, so as to offer, for each specific application, a static mixer of suitable performance, thereby clearly deviating from the known art which instead puts on the market a very limited number of mixer types, among which the user is forced to choose, renouncing *a priori* an optimisation of the mixer in view of the specific application thereof.

The mixer has been illustrated with reference to two specific embodiments shown in the accompanying drawings; however, it is clear that the invention is in no way limited to such embodiments which are merely given as examples; the scope of protection of the invention being solely defined by the contents of the accompanying claims.

## Claims

1. Manufacturing process of a static mixer made of high-melting metal material - of the type which may be introduced in a pipe or associated with the same for forming a portion of said pipe, so as to blend in a homogeneous manner the individual threads of the fluid stream flowing in the pipe, without using rotating parts - comprising the steps of:
a) preparing a computer-processed, three-dimensional drawing of a static mixer comprising a cylindrical outer portion (2) and a blending inner structure (3) consisting of multiple elements, having planar or curved surfaces, variously arranged and angled to the flow direction, wherein said inner structure (3) and said outer cylindrical portion (2) are radiused and connected to one another, with no discontinuities;
b) forming a static mixer of a synthetic and/or waxy powder material having a relatively low-melting point by sintering said powder material with a successive-layer laser device, based on the different drawings of corresponding successive, parallel sections of said three-dimensional drawing;
c) performing infiltration of the static mixer obtained in step b), with ordinary foundry waxes;
d) dipping said infiltrated static mixer of low-melting material in a bath of liquid ceramic material until said last material completely fills the empty spaces of said mixer;
e) heat-treating the product thus obtained at a lower temperature than the melting one of said low-melting material, until the ceramic material hardens completely;
f) heat-treating the product thus obtained at a higher temperature than the melting temperature of the low-melting material, until said material melts completely, obtaining an hollow negative ceramic mould;
g) casting a molten high-melting metal in said hollow negative ceramic mould, obtaining a static mixer of high-melting metal.

2. Manufacturing process of a static mixer as claimed in claim 1), wherein the common axis of said successive parallel sections forms an angle lying between 0° and 90° to the longitudinal axis of said static mixer.

3. Manufacturing process of a static mixer as claimed in claim 1) or 2), wherein said powder low melting material is a synthetic and/or waxy material.

4. Manufacturing process of a static mixer as in any one of claims 1) to 3), further comprising the step of:
- heat treating the sintered powder material to cause it to stabilise.

5. Manufacturing process of a static mixer as in any one of claims 1) to 4), further comprising the step of:
- smoothing the inner surface of the static mixer, in particular to eliminate the parallel lines due to the SLS process or to reduce the height thereof, through a fluid-dynamic abrasive treatment.

6. Manufacturing process of a static mixer as claimed in claim 5), wherein said fluid-dynamic abrasive treatment is carried out with an acidic solution for chemical polishing.

7. Manufacturing process of a static mixer as claimed in claim 5), wherein said fluid-dynamic abrasive treatment is performed with a high-speed, compressed-air current, containing a mixture of abrasive sands.

8. Manufacturing process of a static mixer as in any one of claims 1) to 7), further comprising the step of:
- coating at least part of the inner surfaces of the mixer with metal or plastic material by the processes of: chemical deposition from a metal salt solution, electrochemical deposition from a metal salt solution, melting of plastic material powders, dipping in a liquid thermoplastic mixture, or dipping in a solution comprising a thermosetting plastic material.

## Patentansprüche

1. Verfahren zum Herstellen eines statischen Mischers, der aus einem hochschmelzenden metallischen Material gefertigt ist - des Typs, der in ein Rohr eingebracht oder mit diesem verbunden werden kann, um einen Abschnitt des Rohrs zu bilden, so dass die einzelnen Stränge des Fluidstroms, der in dem Rohr strömt, ohne Verwendung von drehenden Teilen in einer homogenen Weise gemischt werden - umfassend die folgenden Schritte:
a) Vorbereiten einer von einem Computer verarbeiteten, dreidimensionalen Zeichnung eines statischen Mischers, der einen zylindrischen äußeren Abschnitt (2) und eine innere Mischstruktur (3) umfasst, die aus mehreren Elementen besteht, die ebene oder gebogene Oberflächen haben, und die unterschiedlich angeordnet und zur Strömungsrichtung abgewinkelt sind, wobei die genannte innere Struktur (3) und der genannte äußere zylindrische Abschnitt (2) mit Radien versehen sind und miteinander ohne Diskontinuitäten verbunden sind;
b) Herstellen eines statischen Mischers aus einem synthetischen und/oder wachsartigen Pulvermaterial, das einen relativ niedrigen Schmelzpunkt aufweist, durch Sintern des genannten Pulvermaterials mit einer Folgeschicht-Laservorrichtung, auf der Grundlage der unterschiedlichen Zeichnungen von entsprechenden aufeinanderfolgenden, parallelen Schnitten der genannten dreidimensionalen Zeichnung;
c) Durchführen einer Infiltration des im Schritt b) erhaltenen statischen Mischers mit normalen Schmelzwachsen;
d) Eintauchen des genannten infiltrierten statischen Mischers aus niedrigschmelzendem Material in ein Bad aus flüssigem keramischen Material, bis das letztgenannte Material die leeren Zwischenräume des genannten Mischers vollständig ausfüllt;
e) Wärmebehandeln des auf diese Weise erhaltenen Produkts bei einer niedrigeren Temperatur als die Schmelztemperatur des genannten niedrigschmelzenden Materials, bis das keramische Material vollständig ausgehärtet ist;
f) Wärmebehandeln des auf diese Weise erhaltenen Produkts bei einer höheren Temperatur als die Schmelztemperatur des niedrigschmelzenden Materials, bis das genannte Material vollständig schmilzt, wobei eine hohle negative keramische Form erhalten wird:
g) Gießen eines geschmolzenen hochschmelzenden Metalls in die genannte hohle negative keramische Form, wobei ein statischer Mischer aus hochschmelzendem Metall erhalten wird.

2. Verfahren zum Herstellen eines statischen Mischers nach Anspruch 1, wobei die gemeinsame Achse der genannten aufeinanderfolgenden parallelen Schnitte einen Winkel bildet, der zwischen 0° und 90° zur Längsachse des genannten statischen Mischers liegt.

3. Verfahren zum Herstellen eines statischen Mischers nach Anspruch 1 oder 2, **dadurch gekennzeichnet, dass** das genannte niedrigschmelzende Pulvermaterial ein synthetisches und/oder wachsartiges Material ist.

4. Verfahren zum Herstellen eines statischen Mischers nach einem der Ansprüche 1 bis 3, weiter umfassend den Schritt des Wärmebehandelns des gesinterten Pulvermaterials, um es zu einer Stabilisierung zu veranlassen.

5. Verfahren zum Herstellen eines statischen Mischers nach einem der Ansprüche 1 bis 4, weiter umfassend den Schritt des Glättens der inneren Oberfläche des statischen Mischers, insbesondere um die parallelen Linien zu eliminieren, die auf den SLS-Prozess zurückzuführen sind, oder deren Höhe zu reduzieren, durch eine fluiddynamische abrasive Behandlung.

6. Verfahren zum Herstellen eines statischen Mischers nach Anspruch 5, **dadurch gekennzeichnet, dass** die genannte fluiddynamische abrasive Behandlung mit einer sauren Lösung für chemisches Polieren durchgeführt wird.

7. Verfahren zum Herstellen eines statischen Mischers nach Anspruch 5, **dadurch gekennzeichnet, dass** die genannte fluiddynamische abrasive Behandlung mit einem Strom aus Druckluft bei hoher Geschwindigkeit durchgeführt wird, der eine Mischung von abrasiven Sanden enthält.

8. Verfahren zum Herstellen eines statischen Mischers nach einem der Ansprüche 1 bis 7, weiter umfassend den Schritt:
- Beschichten von zumindest einem Teil der inneren Oberflächen des Mischers mit Metall oder Kunststoffmaterial durch die Prozesse: chemische Ablagerung aus einer Metallsalzlösung, elektrochemische Ablagerung aus einer Metallsalzlösung, Schmelzen von Kunststoffmaterialpulvern, Eintauchen in eine flüssige thermoplastische Mischung, oder Eintauchen in eine Lösung, die ein duroplastisches Kunststoffmaterial enthält.

## Revendications

1. Procédé de fabrication d'un mélangeur statique fait d'un matériau de métal à point de fusion élevé - du type qui peut être introduit dans un conduit ou associé au conduit pour former une partie dudit conduit, de manière à mélanger de manière homogène les filets individuels du flux de fluide s'écoulant dans le conduit, sans utiliser de pièces rotatives - comprenant les étapes consistant à :
a) préparer un dessin tridimensionnel assisté par ordinateur d'un mélangeur statique comprenant une partie externe cylindrique (2) et une structure interne de mélange (3) consistant en éléments multiples, ayant des surfaces planes ou courbes, agencés diversement et angulaires par rapport à la direction d'écoulement, où ladite structure interne (3) et ladite partie externe cylindrique (2) sont arrondies et reliées l'une à l'autre, sans discontinuité ;
b) former un mélangeur statique d'une matière en poudre synthétique et/ou cireuse ayant un point de fusion relativement bas en frittant ladite matière en poudre au moyen d'un dispositif à laser à couches successives, sur la base des différents dessins de sections parallèles, successives, correspondantes, dudit dessin tridimensionnel ;
c) réaliser une infiltration du mélangeur statique obtenu à l'étape b), avec des cires de fonderie ordinaires ;
d) plonger ledit mélangeur statique infiltré d'un matériau à bas point de fusion dans un bain de céramique liquide jusqu'à ce que ce dernier matériau remplisse complètement les espaces vides dudit mélangeur ;
e) traiter thermiquement le produit ainsi obtenu à une température inférieure à la température de fusion dudit matériau à bas point de fusion, jusqu'à ce que la céramique durcisse complètement ;
f) traiter thermiquement le produit ainsi obtenu à une température supérieure à la température de fusion du matériau à bas point de fusion, jusqu'à ce que ledit matériau fonde complètement, de façon à obtenir un moule en céramique négatif, creux ;
g) couler un métal à point de fusion élevé, fondu, dans ledit moule en céramique négatif, creux, de façon à obtenir un mélangeur statique de métal à point de fusion élevé.

2. Procédé de fabrication d'un mélangeur statique selon la revendication 1, dans lequel l'axe commun desdites sections parallèles, successives, forme un angle compris entre 0° et 90° par rapport à l'axe longitudinal dudit mélangeur statique.

3. Procédé de fabrication d'un mélangeur statique selon la revendication 1 ou 2, dans lequel ladite matière en poudre à bas point de fusion est une matière synthétique et/ou cireuse.

4. Procédé de fabrication d'un mélangeur statique selon l'une quelconque des revendications 1 à 3, comprenant, en outre, l'étape consistant à :
- traiter thermiquement la matière en poudre frittée pour l'amener à se stabiliser.

5. Procédé de fabrication d'un mélangeur statique selon l'une quelconque des revendications 1 à 4, comprenant, en outre, l'étape consistant à :
- lisser la surface interne du mélangeur statique, en particulier pour supprimer les lignes parallèles dues au procédé SLS ou pour réduire leur hauteur, via un traitement abrasif par dynamique des fluides.

6. Procédé de fabrication d'un mélangeur statique selon la revendication 5, dans lequel ledit traitement abrasif par dynamique des fluides est réalisé avec une solution acide pour polissage chimique.

7. Procédé de fabrication d'un mélangeur statique selon la revendication 5, dans lequel ledit traitement abrasif par dynamique des fluides est réalisé avec un courant d'air comprimé, à grande vitesse, contenant un mélange de sables abrasifs.

8. Procédé de fabrication d'un mélangeur statique selon l'une quelconque des revendications 1 à 7, comprenant, en outre, l'étape consistant à :
- revêtir au moins une partie des surfaces internes du mélangeur de métal ou de matière plastique par les procédés de : dépôt chimique à partir d'une solution de sels métalliques, dépôt électrochimique à partir d'une solution de sels métalliques, fusion de poudres de matières plastiques, immersion dans un mélange thermoplastique liquide, ou immersion dans une solution comprenant une matière plastique thermodurcissable.
